# EUROPÄISCHE PATENTSCHRIFT

(11) **EP 1 889 320 B1**
(45) Veröffentlichungstag und Bekanntmachung des Hinweises auf die Patenterteilung: **01.08.2012**
(21) Anmeldenummer: 06724360.0
(22) Anmeldetag: 15.04.2006
(51) Int. Cl.: H01M 8/06

(54) **Brennstoffzellensystem mit elektrochemischer Wasserstoffentwicklungszelle**
Fuel cell system with an electrochemical hydrogen generation cell
Système de pile à combustible avec cellule électrochimique à dégagement d'hydrogène

(30) Priorität: 18.04.2005 DE 102005018291
(43) Veröffentlichungstag der Anmeldung: 20.02.2008
(73) Patentinhaber: VARTA Microbattery GmbH, 73479 Ellwangen (DE); Fraunhofer-Gesellschaft zur Förderung der angewandten Forschung e.V., 80686 München (DE)
(72) Erfinder: WAGNER, Stefan, 10405 Berlin (DE); HAHN, Robert, 13156 Berlin (DE); HOLL, Konrad, 73434 Aalen-Dewangen (DE); KREIDLER, Bernd, 73479 Ellwangen (DE); KREBS, Martin, 73494 Rosenberg (DE); ILIC, Dejan, 73479 Ellwangen (DE)
(74) Vertreter: Patentanwälte Ruff, Wilhelm, Beier, Dauster & Partner
(86) Internationale Anmeldenummer: PCT/EP2006/003486
(87) Internationale Veröffentlichungsnummer: WO 2006/111335

(56) Entgegenhaltungen:
- EP-A- 1 318 558
- DE-A1- 1 796 284
- DE-A1- 10 155 349
- US-A1- 2004 229 090

## Beschreibung

Die vorliegende Erfindung betrifft ein brennstoffzellenbasiertes System zur Versorgung eines Verbrauchers mit elektrischer Energie.

Portable Geräte wie Handys und Laptops sind aus dem Alltagsleben der heutigen Zeit kaum mehr wegzudenken. Um eine möglichst umfassende Verfügbarkeit dieser Geräte zu gewährleisten, benötigen diese eine autarke, mobile Energieversorgung. Der Zuverlässigkeit und Qualität der Energiequelle kommt demzufolge eine grundlegende Bedeutung zu. Traditionell werden Batterien oder Akkus als Energiequelle für mobile Geräte eingesetzt. Der Gerätebetrieb mit nicht wiederaufladbaren Batterien ist in der Regel allerdings sehr teuer, während Akkus der mechanischen und chemischen Alterung unterliegen. Zudem schreitet die Entwicklung im Bereich portabler elektronischer Produkte rasant fort und geht mit einem stetig steigenden Energiebedarf einher. Herkömmliche Energiequellen sind den stetig steigenden Anforderungen kaum noch gewachsen. Aus diesem Grunde wird seit längerem die Anwendung mobiler Brennstoffzellen als Ersatz von Batterien und Akkus in kleineren Geräten wie Handys und Laptops diskutiert.

Als Brennstoffzelle bezeichnet man eine elektrochemische Zelle, in der ein im Wesentlichen kontinuierlich zugeführter Brennstoff mit einem Oxidationsmittel umgesetzt wird, wobei nutzbare elektrische Energie durch Energiedirektumwandlung aus chemischer Energie gewonnen wird.

Als Brennstoff werden unter anderem Wasserstoff, Hydrazin, Methan, Erdgas, Benzin, Alkohole wie Methanol, oder auch Zuckerlösungen verwendet. Als Oxidationsmittel dienen beispielsweise Sauerstoff, Wasserstoffperoxid oder Kaliumthiocyanat. Im Falle von Sauerstoff als Oxidationsmittel spricht man von "elektrochemischer Verbrennung".

Im allgemeinen Sprachgebrauch wird unter dem Begriff "Brennstoffzelle" meist die Wasserstoff-Sauerstoff-Brennstoffzelle verstanden, in der Wasserstoff als Brennstoff und Sauerstoff als Oxidationsmittel dient. In einer Wasserstoff-Sauerstoff-Brennstoffzelle wird das Prinzip der Elektrolyse von Wasser umgekehrt.

Grundsätzlich unterscheidet man zwischen Niedertemperatur-Brennstoffzellen und Hochtemperatur-Brennstoffzellen. Niedertemperatur-Brennstoffzellen zeichnen sich im Allgemeinen durch einen sehr hohen elektrischen Wirkungsgrad aus. Sie sind aufgrund ihres günstigen leistungsspezifischen Gewichts insbesondere auch für den mobilen Einsatz geeignet. Niedertemperatur-Brennstoffzellen werden in der Regel bei Temperaturen um 60 °C bis 100 °C betrieben. Aufgrund dieses relativ geringen Temperaturniveaus ist ihre Abwärme allerdings nur schlecht nutzbar. Bei Hochtemperatursystemen hingegen kann in einer zweiten Stufe auch die Abwärme genutzt werden, um elektrische Energie zu gewinnen. Die Betriebstemperatur bei Hochtemperatursystemen kann bis zu 1.000 °C betragen.

Zu den heute technisch relevanten Typen von Brennstoffzellen zählen:
- die Alkaline fuel cell (AFC) mit alkalischem Elektrolyten,
- die Proton exchange membran fuel cell (PEMFC) sowie die Direct methanol fuel cell (DMFC) mit protonenleitenden Membranen als Elektrolyten,
- die Phosphor acid fuel cell (PAFC) mit phosphorsauren Elektrolyten,
- die Molten carbonate fuel cell (MCFC) mit Alkalicarbonatschmelzelektrolyten und
- die Solid oxide fuel cell (SOFC) mit keramischem Festelektrolyten.

Die AFC, die DMFC und die PEMFC zählt man zu den Niedertemperatur-Brennstoffzellen, während es sich bei der SOFC (übliche Betriebstemperatur im Bereich zwischen 800 °C und 1.000 °C) und der MCFC (übliche Betriebstemperatur im Bereich zwischen 600 °C und 650 °C) um Hochtemperatur-Brennstoffzellen handelt. Mit einer üblichen Betriebstemperatur im Bereich zwischen 130 °C und 220 °C nehmen die phosphorsauren Zellen (PAFC) eine mittlere Stellung zwischen den Niedertemperatur- und den Hochtemperatur-Zellen ein.

All diese Brennstoffzellentypen setzen sich im allgemeinen aus zwei Elektroden zusammen, die durch einen Elektrolyten voneinander getrennt sind. An der Anode (dem Pluspol) wird der Brennstoff oxidiert (Anodenreaktion). Dabei entstehen unter Abgabe von Elektronen Kationen (z. B. H⁺-Ionen im Fall von Wasserstoff als Brennstoff). Die abgegebenen Elektronen bewegen sich über einen elektrischen Verbraucher (beispielsweise eine Glühbirne) in Richtung Kathode. An der Kathode (dem Minuspol) wird das Oxidationsmittel reduziert (Kathodenreaktion). Dabei entstehen unter Aufnahme von Elektronen Anionen (z. B. negativ geladene Sauerstoffionen im Fall von Sauerstoff als Oxidationsmittel). Die gebildeten Anionen reagieren abschließend mit den zur Kathode gewanderten Kationen. Im Fall von Wasserstoff als Brennstoff und Sauerstoff als Oxidationsmittel bildet sich unter dem Strich Wasser als Produkt der Einzelreaktionen.

Die in einer Wasserstoff-Sauerstoff-Brennstoffzelle ablaufenden Reaktionen lassen sich zusammenfassen wie folgt:
2 H₂ →4 H⁺ + 4 e⁻ (Anodenreaktion: Oxidation/Elektronenabgabe)
O₂ + 4 H⁺ + 4 e → 2 H₂O (Kathodenreaktion: Reduktion/Elektronenaufnahme)
2 H₂ + O₂ → 2 H₂O (Bruttoreaktion: Redoxreaktion)

Dem Elektrolyten kommen in einer Brennstoffzelle mehrere Funktionen zu. Er stellt unter anderem den ionischen Stromtransport in der Brennstoffzelle sicher und bildet zudem eine gasdichte Barriere zwischen den beiden Elektroden. Wie oben bereits erwähnt, ist der Elektrolyt in alkalischen Brennstoffzellen gewöhnlich eine Flüssigkeit. In der PAFC und in der MCFC bilden anorganische, inerte Träger zusammen mit dem Elektrolyten eine ionenleitende und gasdichte Matrix. Bei der SOFC dient im allgemeinen ein Hochtemperatursauerstoffionenleiter (z. B. eine dotierte Zirkoniumoxidkeramik) als keramischer Festelektrolyt. In der PEMFC kommen für H⁺-Ionen durchlässige Polymermembranen zum Einsatz.

Bei den Elektroden in Brennstoffzellen handelt es sich häufig um gasdurchlässige, poröse Elektroden (so genannte Gasdiffusionselektroden), die eine elektrokatalytische Schicht aufweisen. Durch diese Elektroden hindurch werden die jeweiligen Reaktionsgase an den Elektrolyten geführt. Die elektrokatalytische Schicht weist üblicherweise Edelmetalle, Raney-Nickel, Wolframcarbid, Molybdänsulfide, Wolframsulfide oder ähnliche geeignete Materialien auf.

Die Feinstverteilung des Reaktionsgases kann allerdings auch ohne Zwischenschaltung einer Gasdiffusionseinrichtung erfolgen. In der DE 101 55 349 ist ein Mikrobrennstoffzellensystem beschrieben, das eine Membran-Elektroden-Einheit (eine mit einer elektrokatalytischen Schicht versehene, ionenleitfähige Membran, kurz MEA) aufweist, die kathoden- und anodenseitig jeweils mit einer Stromableiterfolie versehen ist. Die Stromableiterfolien weisen Diffusionskanäle auf, die die Feinstdiffusion des Reaktionsgases auf der MEA sicherstellen.

Zur Versorgung einer Brennstoffzelle mit Wasserstoff oder einem anderen Reaktionsgas wird üblicherweise ein voluminöser Gasspeicher, beispielsweise in Form einer Flasche, benutzt. Wasserstoff kann auch in Form einer Metallhydrid-Speiselegierung gespeichert werden. Gegen die Lagerung größerer Mengen an Wasserstoff gibt es allerdings ernstzunehmende Sicherheitsbedenken.

Wie eingangs bereits erwähnt, können neben Wasserstoff z. B. auch andere Brennstoffe wie Methanol oder Erdgas eingesetzt werden. Einige der oben erwähnten Brennstoffzellentypen (z. B. die AFC) sind allerdings nicht für die direkte Umsetzung anderer Brennstoffe als Wasserstoff geeignet. Brennstoffe wie Erdgas oder Benzin müssen in diesem Fall zuerst in Wasserstoff und Kohlendioxid umgewandelt werden. Dies erfordert einen so genannten Reformer. Bei dem Reformer handelt es sich um ein externes Aggregat, das den eingesetzten Brennstoff in wasserstoffreiches Prozessgas umwandelt.

Eine DMFC erlaubt dagegen die direkte Umsetzung von Methanol ohne vorherige Reformierung in ein Reaktionsgas mit hohem Wasserstoffgehalt. Das flüssige Methanol wird direkt in Protonen, freie Elektronen und Kohlendioxid umgewandelt. Die DMFC ist als Weiterentwicklung der PEM-Brennstoffzelle wie diese mit einer Kunststoffmembran als Elektrolyt ausgestattet (siehe oben). Allerdings kommt es beim DMFC-Betrieb wegen der guten Löslichkeit von Methanol in Wasser üblicherweise zu der als Methanol-Crossover bekannten, unerwünschten Permeation von unverbrauchtem Methanol auf die Kathodenseite. Aufgrund des Methanol-Crossovers wird häufig nur mit einem verdünnten Methanol-Wasser-Gemisch gearbeitet, dessen Konzentration über Pumpen und Sensoren aufwendig geregelt werden muss.

Aufgrund der relativ hohen Energiedichte von Methanol liegt der Fokus der meisten Arbeiten auf dem Gebiet der Energieversorgung portabler Elektronikgeräte trotz der genannten Nachteile zur Zeit auf Direktmethanol Brennstoffzellen. Alternativ wird verstärkt auch an einer Kombination aus Brennstoffzelle und Mikroreformer gearbeitet. Trotz großer Anstrengungen ist es jedoch bislang noch nicht gelungen, die Entwicklung dieser Energiesysteme bis zur Serienreife voranzubringen. Es besteht nach wie vor ein dringender Bedarf an möglichst kleinen Energiequellen für tragbare Elektronikgeräte.

Aus der DE 1796284 ist eine Akkumulatorzelle bekannt, in deren Gehäuse eine Brennstoffzelle eingeschraubt ist. In der Akkumulatorzelle erzeugter Wasserstoff wird von der Brennstoffzelle verbraucht. Eine elektrische Kopplung der Akkumulatorzelle mit der Brennstoffzelle ist allerdings nicht vorgesehen.

Aus der US 2004/0229090 ist eine Kombination aus einer Brennstoffzelleneinheit und einer Wasserstoff erzeugenden Einheit bekannt, die elektrisch in Reihe geschaltet sind. Der in der Wasserstoff erzeugenden Einheit gebildete Wasserstoff wird in der Brennstoffzelleneinheit in elektrische Energie umgesetzt.

Ein ähnliches System ist auch in der EP 1318558 offenbart. Auch hier sind eine Wasserstoff erzeugende Einheit und eine Brennstoffzelleneinheit elektrisch in Reihe geschaltet. Beim Anschließen eines Verbrauchers kann über einen Stromregler ein Startstrom fließen, der dazu beitragen kann, dass das beschriebene System leichter anfährt.

Der vorliegenden Erfindung liegt die Aufgabe zugrunde, ein zuverlässiges, auf Brennstoffzellentechnologie basierendes Energiesystem bereitzustellen, das insbesondere den energetischen Anforderungen tragbarer Elektronikgeräte gerecht wird und über eine hohe Energiedichte verfügt.

Zur Lösung dieser Aufgabe schlägt die Erfindung ein System zur Versorgung eines Verbrauchers mit elektrischer Energie mit den Merkmalen des Anspruchs 1 vor. Bevorzugte Ausführungsformen des erfindungsgemäßen Systems gemäß Anspruch 1 sind in den abhängigen Ansprüchen 2 bis 8 beschrieben.

Ein erfindungsgemäßes System zur Versorgung eines Verbrauchers mit elektrischer Energie umfasst mindestens eine Brennstoffversorgungseinheit sowie mindestens eine Brennstoffzelleneinheit. Die Brennstoffversorgungseinheit setzt bei Durchfluss eines elektrischen Stroms einen gasförmigen Brennstoff frei, der in der Brennstoffzelleneinheit unter Stromerzeugung mit einem Oxidationsmittel umgesetzt werden kann.

Bei der Brennstoffversorgungseinheit handelt es sich um eine Gasentwicklungszelle. In der Gasentwicklungszelle ist der gasförmige Brennstoff elektrochemisch erzeugbar, wobei die Menge des pro Zeiteinheit freigesetzten gasförmigen Brennstoffs gemäß dem Faradayschen Gesetz proportional zu der Menge des Stroms ist, der die Versorgungseinheit pro Zeiteinheit durchfließt. Die Brennstoffversorgungseinheit ist der Brennstoffzelleneinheit somit als Quelle chemischer Energie zugeordnet.

Die Brennstoffversorgungseinheit und die Brennstoffzelleneinheit sind elektrisch in Reihe geschaltet, so dass unter Last die im Wesentlichen gleiche Strommenge durch die Versorgungseinheit und durch die Brennstoffzelleneinheit fließt. Da der elektrochemische Prozess in der Gasentwicklungszelle (wie oben beschrieben) an den Stromfluss gekoppelt ist, wird bei steigendem Stromfluss mehr Wasserstoff erzeugt, bei absinkendem Stromfluss weniger. Der Stromfluss ist wiederum mit dem Leistungsbedarf des Verbrauchers gekoppelt. Fließt mehr Strom durch den Verbraucher, so wird in der Gasentwicklungszelle auch mehr Wasserstoff erzeugt, der in der Brennstoffzelleneinheit in elektrische Energie umgesetzt wird.

Folglich kann sich die elektrische Leistung des erfindungsgemäßen Systems im Betrieb bei Bedarf dynamisch dem Leistungsbedarf des Verbrauchers anpassen. Dies erlaubt den Verzicht auf ein separates, aufwendiges Regelungssystem.

Zudem lässt sich festhalten, dass der von der Brennstoffzelle benötigte gasförmige Brennstoff erst bei Bedarf im laufenden Betrieb erzeugt wird. Voluminöse Brennstoffbehälter werden somit nicht benötigt, was sich günstig auf die Energiedichte des Gesamtsystems auswirkt.

Bei dem gasförmigen Brennstoff, der in der Brennstoffzelleneinheit umgesetzt wird, handelt es sich vorzugsweise um Wasserstoff. Dieser wird in geeigneten Gaserzeugungszellen hergestellt.

Beim in der Brennstoffzelleneinheit umgesetzten Oxidationsmittel handelt es sich vorzugsweise um Sauerstoff, insbesondere um Luftsauerstoff.

Das erfindungsgemäße System weist im einfachsten Fall eine Gasentwicklungszelle als Brennstoffversorgungseinheit und eine Brennstoffzelleneinheit auf. Ein solches System liefert in der Regel eine Spannung zwischen ca. 0,5 V und 1,3 V. Diese Spannung kann mit einem Spannungswandler gegebenenfalls an die benötigte Systemspannung angepasst werden. Höhere Spannungen können problemlos durch Reihenschaltung von Gasentwicklungszellen und Brennstoffzellen erzielt werden. Dadurch kann das System auf einfache Weise an die jeweiligen Spannungs- und Stromanforderungen eines Verbrauchers adaptiert werden.

Vorzugsweise wird die gleiche Anzahl von Gasentwicklungszellen und Brennstoffzellen in Reihe geschaltet.

In weiteren bevorzugten Ausführungsformen kann die Zahl der Gasentwicklungszellen aber auch höher als die der Brennstoffzelleneinheiten sein, beispielsweise zum Ausgleich von Gasverlusten in Folge von Undichtigkeiten.

Die erzeugte Gesamtleistung eines erfindungsgemäßen Systems ergibt sich aus der Multiplikation der Stromstärke mit der Summenspannung aus der mindestens einen Brennstoffversorgungseinheit und der mindestens einen Brennstoffzelleneinheit.

Bei der Gasentwicklungszelle handelt es sich vorzugsweise um eine Wasserstoffentwicklungszelle mit einer elektrochemisch oxidierbaren Anode. In einer Wasserstoffentwicklungszelle ist das Reaktionsgas Wasserstoff chemisch in Form von Wasser als Hauptbestandteil des Elektrolyten drucklos gespeichert. Vorzugsweise weist die Wasserstoffentwicklungszelle eine Metallanode, insbesondere aus Zink, auf sowie eine Wasserstoffkathode und einen wässrigen, vorzugsweise alkalischen, Elektrolyten. Besonders bevorzugt sind Wasserstoffentwicklungszellen, die als Aktivmaterial eine Paste aus Zinkpulver, Kalilauge und einem Verdicker und eine Kathode aus einem Katalysator für die Reduktion von Wasser aufweisen. In ihnen erfolgt die Erzeugung von Wasser gemäß den folgenden Reaktionsgleichungen:
Anodenreaktion: Zn + 2 OH- ⇒ ZnO + H2O + 2e-
Kathodenreaktion: 2 H2O + 2 e- ⇒ 2 OH- + H2
Gesamtreaktion: Zn + H2O ⇒ ZnO + H2

Im Verlauf dieser Reaktion wird das im Becher befindliche Zink zu Zinkoxid oxidiert. An der Kathode entsteht Wasserstoffgas, das in Richtung der Brennstoffzelleneinheit abführbar ist.

Die Reaktion läuft nur dann ab, wenn Strom durch die Wasserstoffentwicklungszelle fließt. Die entwickelte Wasserstoffmenge ist mit der geschlossenen elektrischen Ladung über das Faradaysche Gesetz verknüpft. Somit kann die entstehende Wasserstoffmenge über den Strom exakt gesteuert werden.

Ein erfindungsgemäßes System weist vorzugsweise eine Gasentwicklungszelle auf, die im Ruhezustand über eine Ruhespannung von etwa 0,25 V bis 0,35 V verfügt. Derartige geeignete Gasentwicklungszellen sind unter anderem in der DE 35 32 335, der DE 41 16 359 und in der EP 1 396 899 beschrieben, auf die hiermit ausdrücklich Bezug genommen.

Ein erfindungsgemäßes System weist als Brennstoffzelleneinheit besonders bevorzugt eine sehr dünne Einheit, insbesondere eine Folienbrennstoffzelle mit protonenleitender Membran auf, wie sie beispielsweise in der DE 101 55 349 beschrieben ist.

Im einfachsten Fall umfasst ein erfindungsgemäßes System eine Brennstoffzelleneinheit. Umfasst das System mehrere Einheiten, so sind diese räumlich vorzugsweise planar nebeneinander angeordnet.

Werden Folienbrennstoffzellen als Brennstoffzelleneinheiten eingesetzt, so ist es bevorzugt, dass diese eine Membran-Elektroden-Einheit umfasst, die kathodenseitig mit einer porösen Stromableiterfolie und anodenseitig mit einer Ableiterfolie mit integrierter Brennstoff-Feinverteilung versehen ist. Die gesamte Membran-Elektroden-Einheit mit poröser Stromableiterfolie und mit integrierter Brennstoff-Feinverteilung ist vorzugsweise zwischen zwei Platten angeordnet. Die auf der Seite der porösen Stromableiterfolie angeordnete Platte weist insbesondere mindestens eine Öffnung auf, die den Zutritt von Oxidationsmittel, insbesondere von Luftsauerstoff, gewährleistet. Über diese mindestens eine Öffnung erfolgt bevorzugt auch der Austritt von Reaktionsprodukten aus der Brennstoffzelleneinheit. Insbesondere ist erzeugtes Reaktionswasser durch freie Konvektion aus der Brennstoffzelleneinheit abführbar. Auch der Austausch des Oxidationsmittels an der Brennstoffzellenkathode erfolgt im Betrieb bevorzugt kontinuierlich durch freie Konvektion. Unter freier Konvektion soll hier verstanden werden, dass dem Teilchentransport ausschließlich die Auswirkungen eines Temperaturgradienten zugrunde liegen. Zusatzaggregate wie Lüfter oder Pumpen, insbesondere zum Transport der Reaktionsgase, werden nicht benötigt.

Die auf der Seite der Ableiterfolie mit integrierter Brennstoff-Feinverteilung angeordnete Platte weist vorzugsweise mindestens eine Öffnung auf, die die Zuführung von Brennstoff, insbesondere von Wasserstoff, in die mindestens eine Brennstoffzelleneinheit gewährleistet.

Stets weist das erfindungsgemäße System mindestens eine Parallelschaltung zu der mindestens einen Brennstoffzelleneinheit auf. Die mindestens eine Parallelschaltung ist vorzugsweise für sehr niedrige Ströme (im Vergleich zum Stromfluss durch die mindestens eine Brennstoffzelleneinheit) ausgelegt.

In Weiterbildung ist der mindestens einen Brennstoffzelleneinheit mindestens ein elektrischer Gleichrichter, insbesondere mindestens eine Diode, oder mindestens ein Widerstand parallelgeschaltet.

Ein erfindungsgemäßes System weist vorzugsweise ein Ventil, insbesondere ein mechanisches Ventil, auf, das den Eintritt von Brennstoff in die Brennstoffzelleneinheit regelt. In einer bevorzugten Ausführungsform handelt es sich bei dem Ventil um eine geschlitzte Silikonmembran. Das Ventil kontrolliert die Brennstoffzufuhr zwischen Gasentwicklungszelle und Brennstoffzelleneinheit. Es öffnet vorzugsweise bereits bei geringem Wasserstoffüberdruck in der Gasentwicklungszelle. Zusammen mit der protonenleitenden Membran der Brennstoffzelleneinheit verhindert es das Eindringen von Umgebungsluft und Luftfeuchtigkeit über die Brennstoffzelleneinheit in die Gasentwicklungszelle.

Vorzugsweise ist die Brennstoffzelleneinheit im Ruhezustand drucklos. Im Bedarfsfall kann sie aber schnell aktiviert werden. In einer besonders bevorzugten Ausführungsform des erfindungsgemäßen Systems ist zwischen Versorgungseinheit und Brennstoffzelleneinheit ein Gasreservoir als Brennstoff-Zwischenspeicher angeordnet. Dieses dient dem Abfangen von Leistungsspitzen und gewährleistet zudem ein schnelles Ansprechen des Systems.

Es ist bevorzugt, dass das erfindungsgemäße System mindestens ein Verbindungsmittel, insbesondere in Form eines Adapters, umfasst, das die mindestens eine Brennstoffversorgungseinheit der mindestens einen Brennstoffzelleneinheit gasdicht verbindet, so dass im Betrieb kein Wasserstoff verlorengeht.

Besonders bevorzugt ist das Verbindungsmittel als Gehäuse ausgestaltet, welches die mindestens eine Brennstoffversorgungseinheit gasdicht umschließt. Das Gehäuse weist vorzugsweise einen elektrisch isolierenden Teil auf sowie in diesen eingesetzt einen Metalldeckel, der als Minus-Ableiter des Gesamtsystems fungiert. Die mindestens eine Brennstoffzelleneinheit ist vorzugsweise mit der Anodenseite nach innen gerichtet in das gasdichte Gehäuse eingesetzt. Ein als Pluspol des Gesamtsystems fungierender Kontakt ist bevorzugt auf der Außenseite der mindestens einen Brennstoffzelleneinheit angeordnet.

In einer besonders bevorzugten Ausführungsform ist die Brennstoffversorgungseinheit eines erfindungsgemäßen Systems austauschbar. Vorzugsweise ist das Gehäuse zu diesem Zweck mit einer gasdicht schließenden Öffnung versehen, über die eine verbrauchte Brennstoffversorgungseinheit gegen eine volle ausgetauscht werden kann. Es ist dabei zu betonen, dass natürlich nur die Brennstoffversorgungseinheit ausgetauscht werden muss. Die Brennstoffzelleneinheit kann im System verbleiben.

Bevorzugt werden die Abmessungen eines erfindungsgemäßen Systems so gewählt, dass sich dadurch eine Primarbatterie ersetzen lässt. Das erfindungsgemäße System lässt sich beispielsweise mit den Abmessungen einer Monozelle (also mit einer Höhe von ca. 6 cm und einem Durchmesser von ca. 3,4 cm) oder einer Triple A-Mikrozelle bzw. Double A-Mikrozelle (mit einer Höhe von ca. 4,5 cm und einem Durchmesser von ca. 1 cm bzw. einer Höhe von ca. 5,1 cm und einem Durchmesser von ca. 1,5 cm) konstruieren.

Weitere Merkmale der Erfindung ergeben sich aus den Zeichnungen sowie aus der nachfolgenden Beschreibung von bevorzugten Ausführungsformen in Verbindung mit den Unteransprüchen. Hierbei können die einzelnen Merkmale jeweils für sich oder zu mehreren in Kombination miteinander bei einer Ausführungsform der Erfindung verwirklicht sein. Die beschriebenen besonderen Ausführungsformen dienen lediglich zur Erläuterung und zum besseren Verständnis der Erfindung und sind in keiner Weise einschränkend zu verstehen. Auch die nachstehend beschriebenen Zeichnungen sind Bestandteil der vorliegenden Beschreibung, was hiermit durch ausdrückliche Bezugnahme bekräftigt wird.
In Fig. 1 ist der Querschnitt einer als Brennstoffversorgungseinheit geeigneten Gasentwicklungszelle dargestellt.
In Fig. 2a ist der Querschnitt einer bevorzugten Ausführungsform eines erfindungsgemäßen Systems mit mehreren Brennstoffzelleneinheiten und mehreren Brennstoffversorgungseinheiten dargestellt.
In Fig. 2b ist die flache Gehäuseoberseite des in Fig. 2a dargestellten Systems abgebildet, in die mehrere Brennstoffzelleneinheiten eingesetzt sind.
Fig. 3 zeigt ein Ventil in Form einer einfachen, geschlitzten Membran, das zur Regelung der Brennstoffzufuhr zwischen Gasentwicklungszelle und Brennstoffzelleneinheit geeignet ist.
Fig. 4 zeigt eine einfache elektrische Schaltung einer Ausführungsform eines erfindungsgemäßen Systems (ausgebildet gemäß Fig. 2a bzw. Fig. 2b) mit einem Verbraucher.
In Fig. 5 ist schematisch der Stromverlauf einer Ausführungsform eines gemäß Fig. 4 verschalteten, erfindungsgemäßen Systems nach Zuschalten eines Verbrauchers illustriert.
Fig. 6 zeigt den Potentialverlauf einer Ausführungsform eines gemäß Fig. 4 verschalteten, erfindungsgemäßen Systems nach Zuschalten eines Verbrauchers.
Fig. 7 zeigt eine Anordnung von vier Brennstoffzellen auf einem kreisförmigen Substrat.
Fig. 8 zeigt im Querschnitt den schematischen Aufbau einer als Brennstoffzelleneinheit geeigneten Folienbrennstoffzelle mit Gasverteilung.

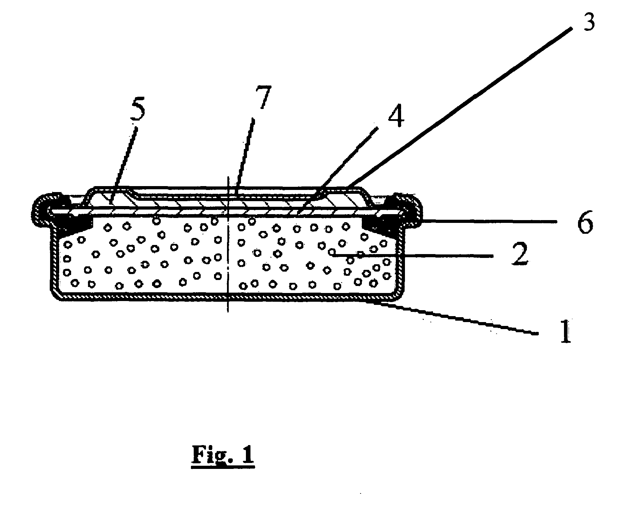

Die in Fig. 1 dargestellte Gasentwicklerzelle besitzt ein Gehäuse aus einem Becher 1, einem Deckel 3 und einer Dichtung 6. Der Becher enthält als Aktivmaterial eine Paste 2 aus Zinkpulver, Kalilauge und einem Verdicker. Im Deckel befindet sich die Kathode 4. Die Kathode besteht aus einem Katalysator für die Reduktion von Wasser. Die Zelle weist eine Ruhespannung im Bereich zwischen 0,25 V und 0,35 V auf.

Beim Fließen von Strom durch die Gasentwicklungszelle wird das im Becher 1 befindliche Zink zu Zinkoxid oxidiert. In den Poren der Kathode 4 entsteht Wasserstoffgas, das in den Gasraum 5 entweicht und durch die Öffnung 7 aus der Zelle abströmen kann.

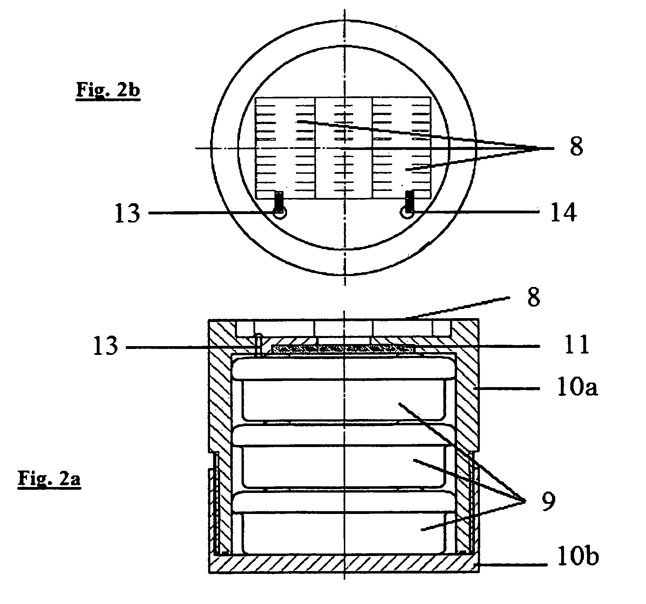

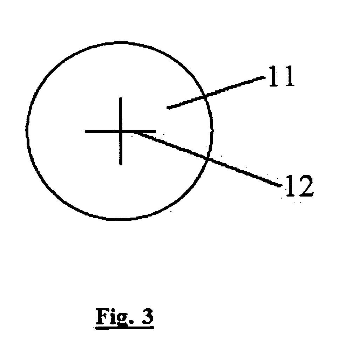

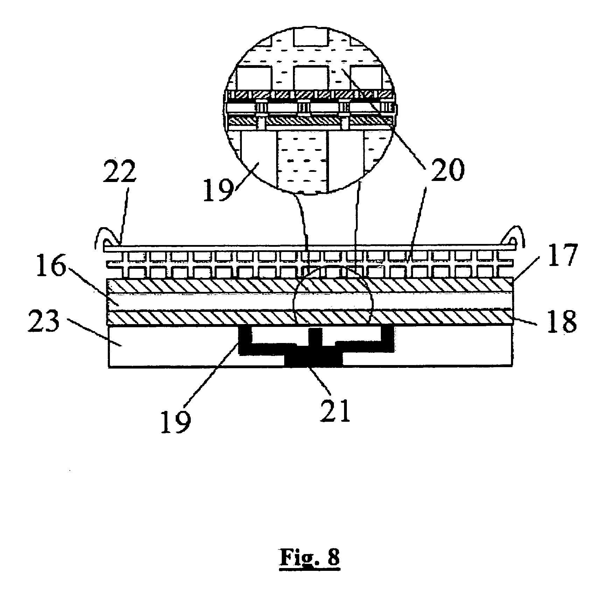

Die in Fig. 2a (Querschnitt) und Fig. 2b (Aufsicht) dargestellte Ausführungsform eines erfindungsgemäßen Brennstoffzellensystems besteht aus drei Brennstoffzelleneinheiten 8, den drei (gemäß Fig. 1 ausgebildeten) Gasentwicklungszellen 9 und einem Adapter 10, der in Form eines gasdichten Gehäuses um die Komponenten ausgebildet ist. Der Adapter besteht aus dem elektrisch isolierenden Teil 10a und einem Metalldeckel 10b, der auch als Minus-Ableiter des Gesamtsystems fungiert. Die Gasentwicklungszellen sind von den Brennstoffzellen in dem hier gezeigten Beispiel durch eine Silikonmembran 11 getrennt (vergleiche Fig. 3). Die Brennstoffzelleneinheiten sind gasdicht mit der Anodenseite nach innen gerichtet in den isolierenden Gehäuseteil 10a eingearbeitet. Es handelt sich dabei um flache Folienbrennstoffzellen, die in Fig. 8 dargestellt sind. Diese weisen anodenseitig eine Ableiterfolie mit integrierter Brennstoff-Feinverteilung auf.

Die drei Brennstoffzelleneinheiten und die drei Gasentwicklungszellen sind elektrisch in Reihe geschaltet. Dadurch wird eine höhere elektrische Spannung erzielt. Die elektrische Verbindung zwischen den Brennstoffzelleneinheiten und den Gasentwicklungszellen erfolgt durch den gasdicht durch das Gehäuseteile 10a geführten Kontakt 13. Ein Verbraucher kann über den Metalldeckel 10b (Minus-Pol) und den Kontakt 14 (Plus-Pol) angeschlossen werden.

Unter Last erzeugen die drei in Reihe geschalteten Gasentwicklungszellen Wasserstoff, der in den Innenraum des gasdichten Gehäuses entweicht. Über die Silikonmembran strömt der Wasserstoff zu den Brennstoffzelleneinheiten, in denen er mit Sauerstoff umgesetzt wird.

Fig. 3 zeigt die bereits angesprochene einfache, mit den Schlitzen 12 versehene Membran 11 aus Silikon mit Ventilfunktion.

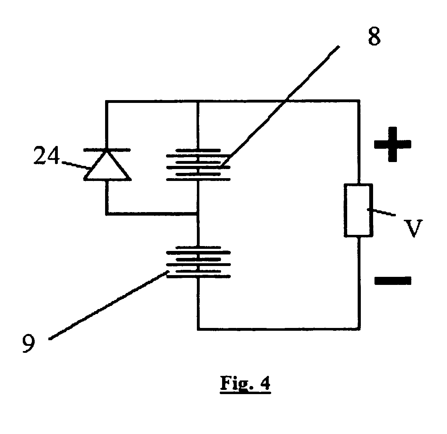

In Fig. 4 ist eine einfache elektrische Verschaltung einer Ausführungsform eines erfindungsgemäßen Systems mit einem Verbraucher schematisch dargestellt. Drei Brennstoffzelleneinheiten 8 sind mit drei Gasentwicklungszellen 9 (ausgebildet gemäß Fig. 1) in Reihe geschaltet. Die Gasentwicklungszellen weisen jeweils eine Ruhespannung zwischen 0,25 V und 0,35 V auf. Wird ein elektrischer Verbraucher V angeschlossen, so fließt zuerst ein relativ niedriger Strom über die Diode 24, die den Brennstoffzelleneinheiten parallel geschaltet ist. Mit Fließen dieses Stroms setzt in den Gasentwicklungszellen die Wasserstoffentwicklung gemäß der Reaktionsgleichung H₂O + Zn → H₂ + ZnO ein. Nach kurzer Zeit steigt der Wasserstoffdruck im Adapter an, und der Wasserstoff strömt über die Membran 11 an die Anodenseite der Brennstoffzelleneinheiten 8. In den Brennstoffzelleneinheiten setzt die Wasserstoffverbrennung gemäß der Reaktionsgleichung H₂ + ½ O₂ → H₂O ein. Die in den Brennstoffzelleneinheiten und den Gasentwicklungszellen stattfindenden Einzelreaktionen lassen sich als Bruttoreaktionsgleichung Zn + H₂O → ZnO + H₂ zusammenfassen.

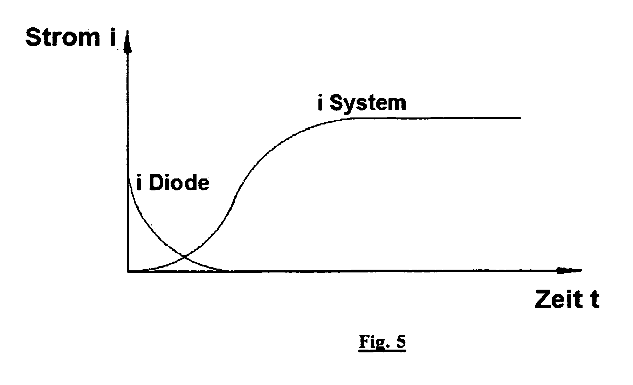

In Fig. 5 ist der gemessene Stromverlauf eines gemäß Fig. 4 verschalteten Systems nach Zuschalten eines Verbrauchers schematisch dargestellt. Das Diagramm zeigt nach kurzer Verzögerung ein starkes Ansteigen des gemessenen Brennstoffzellenstroms, begleitet von einem gleichzeitigen Absinken des Stromflusses durch die Diode.

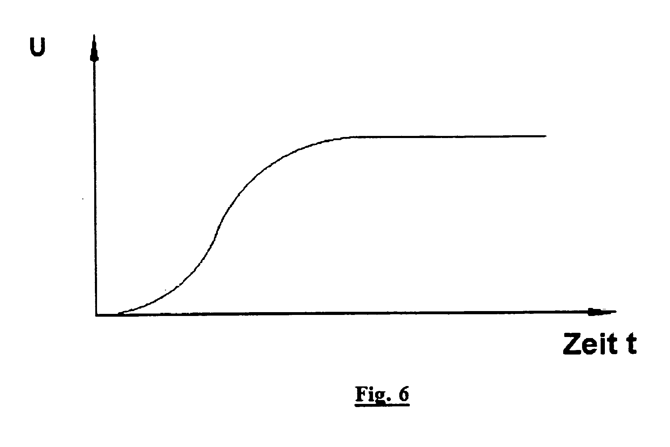

Fig. 6 zeigt den Potentialverlauf eines erfindungsgemäßen Systems nach Zuschalten eines Verbrauchers. Das Diagramm zeigt nach kurzer Verzögerung einen schnellen Potentialanstieg.

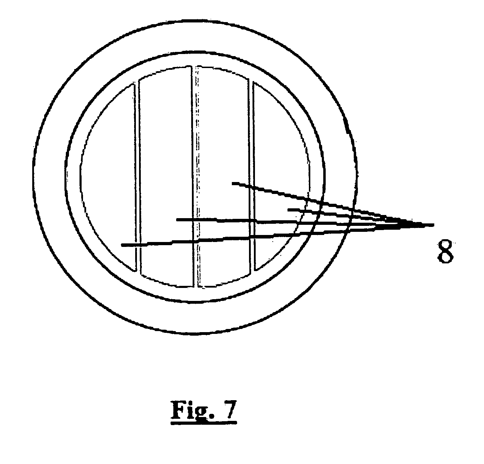

Fig. 7 zeigt eine mögliche Anordnung von 4 Brennstoffzellen 8 auf einem kreisförmigen Substrat.

Fig. 8 zeigt einen Querschnitt durch eine als Brennstoffzelleneinheit geeignete Folienbrennstoffzelle. Die Folienbrennstoffzelle bestehend aus einer porösen kathodenseitigen Stromableiterfolie 17, der Membran-Elektrode-Einheit (MEA) 16 und der anodenseitigen Stromableiterfolie 18 mit integrierter Wasserstoff-Feinverteilung ist zwischen zwei Platten 20 und 23 eingepresst. Die untere Platte 23 übernimmt die Wasserstoff-Gasverteilung vom Zufluss 21 aus der Gasentwicklungszelle zu den einzelnen Brennstoffzellen (einzelne Zuflüsse 19). Die obere Platte 20 enthält gitterförmige oder geschlitzte Öffnungen, durch die der Luftsauerstoff zutritt bzw. das Reaktionswasser abtransportiert wird. Der Verbund wird am Rand durch Klammern oder eine Umbördelung 22 zusammengedrückt.

## Patentansprüche

1. System zur Versorgung eines Verbrauchers mit elektrischer Energie, umfassend
- mindestens eine Brennstoffversorgungseinheit (9) in Form einer Gasentwicklungszelle, die bei Durchfluss eines elektrischen Stroms einen gasförmigen Brennstoff freisetzt und
- mindestens eine Brennstoffzelleneinheit (8), in der der freigesetzte gasförmige Brennstoff unter Stromerzeugung mit einem Oxidationsmittel umsetzbar ist,
**dadurch gekennzeichnet, dass** die mindestens eine Versorgungseinheit (9) und die mindestens eine Brennstoffzelleneinheit (8) elektrisch in Reihe geschaltet sind, so dass durch beide unter Last die im Wesentlichen gleiche Strommenge fließt und dass mindestens eine elektrischer Gleichrichter oder mindestens ein Widerstand parallel zu der mindestens einen Brennstoffzelleneinheit (8) geschalten ist, über die oder den ein elektrischer Strom von der mindestens einen Brennstoffversorgungseinheit (9) fließen kann.

2. System nach Anspruch 1, **dadurch gekennzeichnet, dass** die Gasentwicklungszelle eine Wasserstoffentwicklungszelle mit einer elektrochemisch oxidierbaren Anode, einer Wasserstoffkathode und einem wässrigen, vorzugsweise alkalischen, Elektrolyten ist.

3. System nach einem der Ansprüche 1 oder 2, **dadurch gekennzeichnet, dass** die Gasentwicklungszelle eine Ruhespannung von etwa 0,25 V - 0,35 V aufweist.

4. System nach Anspruch 3, **dadurch gekennzeichnet, dass** es sich bei der Brennstoffzelleneiheit um eine Folienbrennstoffzelle handelt, wobei die Folienbrennstoffzelle eine kathodenseitig mit einer porösen Stromableiterfolie (17) und anodenseitig mit einer Ableiterfolie (18) mit integrierter Brennstoff-Feinverteilung verbundene Membran-Elektroden-Einheit (16) umfasst.

5. System nach einem der vorhergehenden Ansprüche, **dadurch gekennzeichnet, dass** es mindestens ein Verbindungsmittel, insbesondere in Form eines Adapters (10), umfasst, das die mindestens eine Versorgungseinheit mit der mindestens einen Brennstoffzelleneinheit gasdicht verbindet.

6. System nach Anspruch 5, **dadurch gekennzeichnet, dass** das Verbindungsmittel als Gehäuse ausgestaltet ist, das die mindestens eine Versorgungseinheit gasdicht umschließt.

7. System nach Anspruch 6, **dadurch gekennzeichnet, dass** die mindestens eine Brennstoffzelleneinheit mit der Anodenseite nach innen gerichtet in das gasdichte Gehäuse eingesetzt ist.

8. System nach einem der vorhergehenden Ansprüche mit den äußeren Abmessungen einer Monozelle.

## Claims

1. A system for supplying a consuming appliance with electric energy, comprising
- at least one fuel supply unit (9) in the form of a gas evolution cell, which liberates a gaseous fuel on passage of an electric current, and
- at least one fuel cell unit (8) in which the gaseous fuel liberated can be reacted with an oxidant to generate electric power,
**characterized in that** the at least one fuel supply unit (9) and the at least one fuel cell unit (8) are connected in series electrically so that, under load, essentially the same amount of charge flows through both the supply unit and the fuel cell unit, and
**in that** at least one rectifier or at least one resistor is connected in parallel to the at least one fuel cell unit (8) to allow flow of electric current from the at least one fuel supply unit (9) therethrough.

2. The system as claimed in claim 1, **characterized in that** the gas evolution cell is a hydrogen evolution cell having an electrochemically oxidizable anode, a hydrogen cathode and an aqueous, preferably alkaline electrolyte.

3. The system as claimed in either claim 1 or 2, **characterized in that** the gas evolution cell has an open-circuit voltage of about 0.25 V - 0.35 V.

4. The system as claimed in claim 3, **characterized in that** the fuel cell unit is a foil fuel cell, wherein the foil fuel cell comprises a membrane-electrode assembly (16) connected on the cathode side to a porous power outlet foil (17) and on the anode side to an outlet foil (18) having integrated fine dispersion of fuel.

5. The system as claimed in any of the preceding claims, **characterized in that** it comprises at least one connection means, in particular in the form of an adapter (10), which connects the at least one supply unit to the at least one fuel cell unit in a gastight manner.

6. The system as claimed in claim 5, **characterized in that** the connection is configured as a housing which encloses the at least one supply unit in a gastight manner.

7. The system as claimed in claim 6, **characterized in that** the at least one fuel cell unit is set with the anode side facing inward into the gastight housing.

8. The system as claimed in any of the preceding claims having the external dimensions of a monocell.

## Revendications

1. Système d'alimentation d'un consommateur en énergie électrique, le système comprenant :
- au moins une unité (9) d'alimentation en combustible qui présente la forme d'une cellule de dégagement de gaz qui libère un combustible gazeux lorsqu'elle est traversée par un courant électrique et
- au moins une unité (8) de cellule à combustible dans laquelle le combustible gazeux libéré peut réagir avec un agent oxydant de manière à produire du courant, **caractérisé en ce que**
la ou les unités d'alimentation (9) et la ou les unités (8) de cellule à combustible sont raccordées électriquement en série de telle sorte qu'en charge, elles soient toutes deux traversées par essentiellement la même intensité de courant et
**en ce qu'**au moins un redresseur électrique ou au moins une résistance par lesquels un courant électrique provenant de la ou des unités (9) d'alimentation en combustible peut s'écouler sont raccordés en parallèle à la ou aux unités (8) de cellule à combustible.

2. Système selon la revendication 1, **caractérisé en ce que** la cellule de dégagement de gaz est une cellule de dégagement d'hydrogène qui présente une anode oxydable par voie électrochimique, une cathode à hydrogène et un électrolyte aqueux, de préférence alcalin.

3. Système selon l'une des revendications 1 ou 2, **caractérisé en ce que** la cellule de dégagement de gaz présente une tension au repos de 0,25 V à 0,35 V.

4. Système selon la revendication 3, **caractérisé en ce que** l'unité de cellule à combustible est une cellule à combustible en films, la cellule à combustible en films comprenant une unité (16) de membrane et électrode reliée du côté de la cathode à un film poreux (17) d'évacuation du courant et du côté de l'anode à un film (18) d'évacuation dans lequel est intégrée une fine répartition de combustible.

5. Système selon l'une des revendications précédentes, **caractérisé en ce qu'**il comporte au moins un moyen de raccordement qui présente en particulier la forme d'un adaptateur (10) qui relie de manière étanche au gaz la ou les unités d'alimentation à la ou aux unités de cellule à combustible.

6. Système selon la revendication 5, **caractérisé en ce que** le moyen de raccordement est configuré sous la forme d'un boîtier qui entoure de manière étanche au gaz la ou les unités d'alimentation.

7. Système selon la revendication 6, **caractérisé en ce que** la ou les unités de cellule à combustible sont utilisées avec leur côté anodique orienté vers l'intérieur dans le boîtier étanche au gaz.

8. Système selon l'une des revendications précédentes, dont les dimensions extérieures sont celles d'une monocellule.
